Europäisches Patentamt

European Patent Office

Office européen des brevets

(11) Publication number: **0 392 595**
**A1**

(19)

## EUROPEAN PATENT APPLICATION

(21) Application number: **90200802.8**

(51) Int. Cl.⁵: **G11B 23/087, G11B 15/17**

(22) Date of filing: **04.04.90**

(30) Priority: **10.04.89 NL 8900879**

(43) Date of publication of application:
**17.10.90 Bulletin 90/42**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Oostdijk, Jules Hermann Gerardus**
**c/o INT. OCTROOIBUREAU B.V. Prof.**
**Holstlaan 6**
**NL-5656 AA Eindhoven(NL)**
Inventor: **Olierook, John Cornelius Joseph**
**c/o INT. OCTROOIBUREAU B.V. Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **System comprising a cassette, apparatus suitable for cooperation with the cassette and cassette and apparatus suitable for use in such a system.**

(57) A system comprises a cassette (1) and an apparatus (101; 111) suitable for cooperation with the cassette. The cassette is pole-symmetrical relative to an axis (65) perpendicular to and through the centre of a longitudinal wall (9) formed with openings (61). Moreover, the cassette is asymmetrical relative to a plane (29) perpendicular to the main walls (5, 7) and perpendicular to and through the centre of said longitudinal wall (9). This precludes misinsertion of the cassette (1) into the apparatus (30; 32) which comprises blocking means (105; 115).

FIG.2

## System comprising a cassette, apparatus suitable for cooperation with the cassette, and cassette and apparatus suitable for use in such a system.

The invention relates to a system comprising a cassette and an apparatus suitable for cooperation with the cassette, which cassette comprises a substantially rectangular housing comprising two parallel main walls, a first and a second longitudinal wall which extend parallel with each other, and a first and a second transverse wall which extend parallel to one another, the first transverse wall being formed with a first profile over a first length, which first profile is similar over its entire length, and the second transverse wall being formed with a second profile over a second length, which second profile is similar over its entire length, said profiles both extending into at least the first longitudinal wall, which cassette can be inserted into the apparatus in a correct position in a direction perpendicular to the longitudinal walls.

The invention also relates to a cassette and to an apparatus suitable for use in such a system.

A system of the type defined in the opening paragraph is known from GB-A-1,480,461. In this known system the cassette and the apparatus are constructed in such a way that the cassette can be inserted correctly into the apparatus in one position only. The known cassette and the known apparatus cannot be used if the system also includes apparatuses into which the cassettes can be inserted not only in said correct position but also in a further correct position.

It is an object of the invention to provide a system in which a cassette belonging to the system can be inserted correctly in every apparatus belonging to the system.

To this end the invention is characterized in that if a mirror image of the first profile is formed in a first plane parallel to the transverse walls and containing the centre of the cassette and subsequently in a second plane parallel to the main walls and containing the centre of the cassette the mirror image of the first profile at least substantially coincides with the second profile, in that if a mirror image of the first profile is formed in the second plane the mirror image of the first profile is not similar to the second profile, and in that in an insertion path of the apparatus blocking means are arranged to cooperate with at least one of the transverse walls of a cassette in such a manner that the cassette can be inserted into the apparatus in the correct position. This shape of the cassette and a suitable choice of the position of the blocking means in the apparatuses enable the cassette to be inserted in the correct position into apparatuses belonging to the system and also enable the cassette to be inserted into further apparatuses belonging the system to the system in a further correct position additional to the said correct position. This will be illustrated by means of the embodiments of the system in accordance with the invention described hereinafter.

An embodiment of the system in accordance with the invention is characterized in that the profiles extend over the full length of the transverse walls and into the two longitudinal walls. This embodiment is advantageous if the system also includes apparatuses into which the cassettes can be inserted in two correct positions. Since the blocking means can now be arranged at the front as well as the back or at another location in the path of insertion in the apparatus this leads to greater freedom in designing the apparatus.

Another embodiment of the system in accordance with the invention is characterized in that the first length of the first profile differs from the second length of the second profile, and in that the blocking means which cooperate with the first transverse wall during operation and the blocking means which cooperate with the second transverse wall during cooperation are spaced from one another viewed in a direction of insertion. In apparatuses in which the cassettes should be inserted in only one correct position this ensures that the cassettes can actually be loaded in only one correct position. This will be explained in the description with reference to the Figures.

A further embodiment of the system in accordance with the invention is characterized in that the first transverse wall is formed with a third profile over a further length, which third profile is similar over said further length, in that the second transverse wall is formed with a fourth profile over a further length, which fourth profile is similar over said further length, which third and fourth profiles extend from the second longitudinal wall, in that when the mirror image of the third profile is formed in the first plane and subsequently in the second plane the mirror image of the third profile at least substantially coincides with the fourth profile, and in that when the mirror image of the third profile is formed in the second plane the mirror image of the third profile is not similar to the fourth profile. This is an advantage if in addition to apparatuses in which the cassette is to be inserted in a first direction perpendicular to the longitudinal walls the system also comprises apparatuses in which the cassette is to be inserted in a second direction perpendicular to the longitudinal walls and opposite to the first direction. Depending upon the location of the blocking means in the apparatus it is possible to prevent the cassette from being inserted with the wrong longitudinal wall facing forwards.

Apparatuses, such as car cassette-players for cassettes in conformity with the well-known Compact Cassette system (standardized in IEC publication 94), are known in which the cassette is to be inserted into the apparatus with a transverse wall facing forwards. Misinsertion of the known cassette is precluded by forming the walls of the loading aperture with recesses corresponding to the thicker portion of the Compact Cassette in the main walls near the opening in the first side wall. The invention provides a solution for cassettes not having such a thicker portion.

For this purpose an embodiment of the system in accordance with the invention is characterized in that the system comprises a further apparatus enabling the cassette to be inserted in the correct position into the further apparatus in a further direction perpendicular to the transverse walls, in that the first longitudinal wall is formed with a fifth profile over a length, which fifth profile is similar over said length, in that the second longitudinal wall is formed with a sixth profile over a length, which sixth profile is similar over said length, which profiles both extend into at least one of the transverse walls, in that when the mirror image of the fifth profile is formed in a third plane parallel to the longitudinal walls and containing the centre of the cassette the mirror image of the fifth profile is not similar to the sixth profile, and in that in a path of insertion of the further apparatus blocking means are arranged to cooperate with at least one of the longitudinal walls of a cassette to be inserted, in such a manner that the cassette can be inserted into the further apparatus in the correct position. This shape of the cassette and a suitable choice of the location of the blocking means in the apparatuses also enable the cassette to be introduced in the correct position into apparatuses belonging to the system and moreover enable the cassette to be inserted in a further correct position, additional to the said correct position, into further apparatuses also belonging to the system.

In order to preclude misinsertion of the cassettes in another embodiment of the above-mentioned further apparatuses, which should accept the cassettes in only one correct position, a further embodiment of the system in accordance with the invention is characterized in that the sixth profile is asymmetrical relative to the second plane.

Embodiments of cassettes and apparatuses in accordance with the invention will now be described in more detail, by way of example, with reference to the accompanying drawings. In the drawings:

Figures 1a to 1e give different views of a first embodiment of the cassette belonging to the system,

Figure 2 is a plan view of a first embodiment of an apparatus belonging to the system in accordance with the invention,

Figure 3 is a front view of the apparatus shown in Figure 2,

Figure 4 is a plan view of a second embodiment of an apparatus belonging to the system in accordance with the invention,

Figure 5 is a front view of the apparatus shown in Figure 4,

Figure 6 shows a second embodiment of a cassette belonging to the system in accordance with the invention,

Figures 7a to 7c give different views of a third embodiment of the cassette which cooperates with a third embodiment of the apparatus belonging to the system,

Figures 8a to 8d are different views of a fourth embodiment of a cassette belonging to the system,

Figure 9 shows a fourth embodiment of an apparatus belonging to the system,

Figure 10 is a view of a fifth embodiment of the cassette belonging to the system, and

Figure 11 shows a fifth embodiment of an apparatus belonging to the system in accordance with the invention.

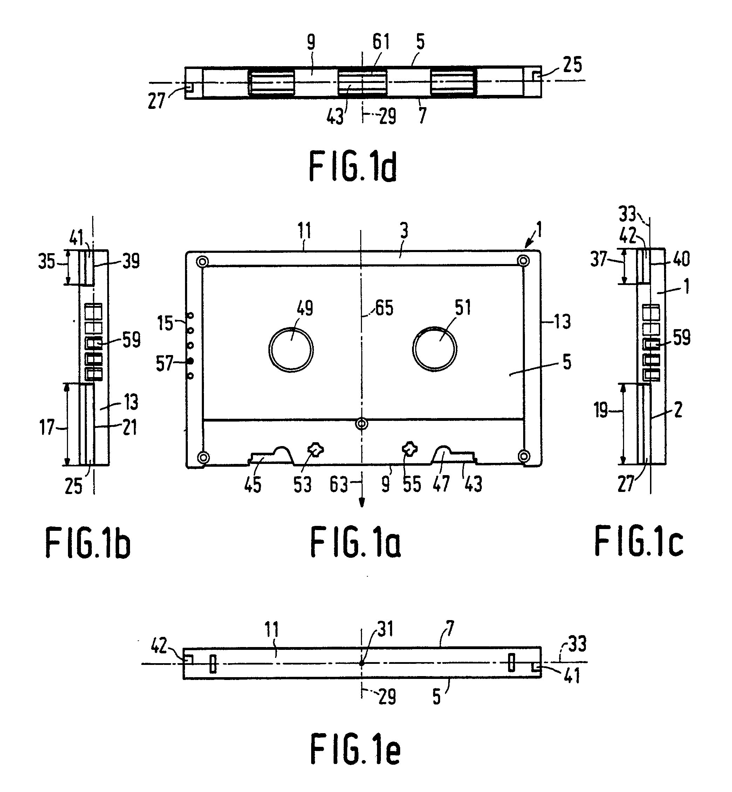

Figures 1a to 1e are different views of a first embodiment of a cassette 1 belonging to the system in accordance with the invention. The cassette 1 comprises a rectangular housing 3 having two main walls 5 and 7, a first and a second longitudinal wall 9, 11, and a first and a second transverse wall 13, 15. In the present embodiment the cassette is a magnetic-tape cassette 1 which accommodates a magnetic tape 43 wound on reels. The cassette has apertures 45, 47 for the passage of tape-drive means, drive apertures 49, 51 for the passage of reel-drive means, locating apertures 53, 55 for the passage of locating pins, and the cassette further comprises coding means in the form of openings 57 and 59 which can be closed and which are formed in the main walls 5, 7 and in the transverse walls 13, 15. The first longitudinal wall 9 is formed with a magnetic-head opening 61 across which a part of the magnetic tape 43 extends. This magnetic-head opening 61 allows the magnetic tape to cooperate with magnetic heads of an apparatus. Over a first length 17 the first transverse wall 13 is formed with a first profile 21 in the form of a groove 25 and over a second length 19 the second transverse wall 15 is formed with a second profile 23 also in the form of a groove 27. The profiles 21, 23 are shaped in such a way that if the mirror image of the first profile 21 is formed in a first plane parallel to the transverse walls and containing the centre 31 of the cassette and subsequently in a second plane 33 parallel to the main walls and containing the centre 31 of the cassette, the mirror image of the first profile 21 coincides with the second profile 23. Moreover, when the mirror image of the first profile 21 is formed in the second plane 33 the mirror image of the first profile 21 is not similar to the second profile 23.

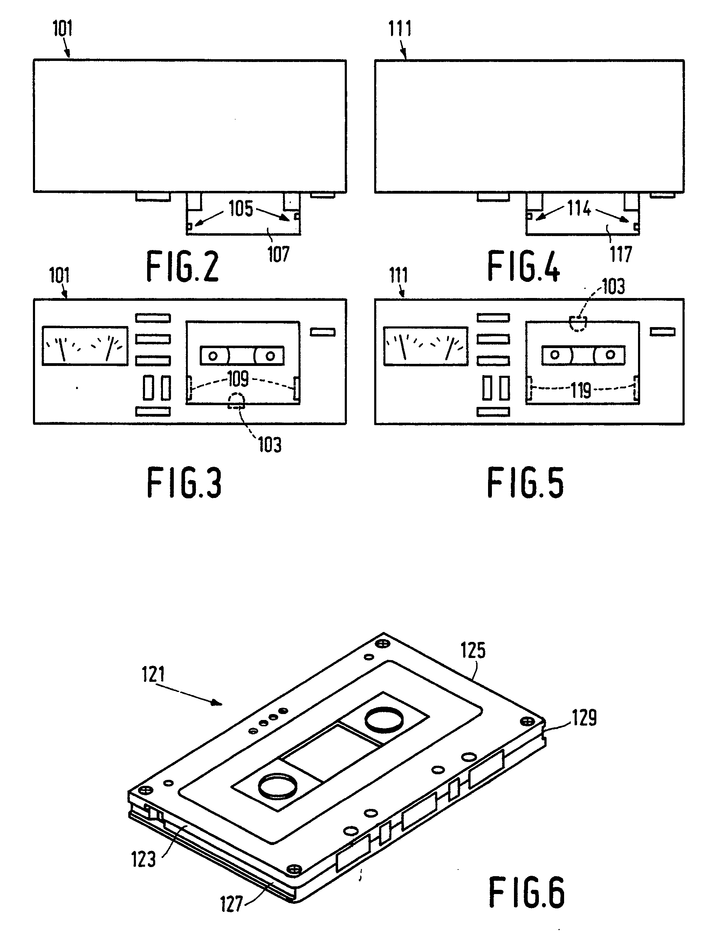

This shape of the profiles 21 and 23 prevents the cassette 1 from being misinserted into an apparatus belonging to the system. Figures 2 and 3 show an apparatus 101 belonging to the system. The cassette should be inserted into this apparatus with the first longitudinal wall 9 facing forwards in a direction 63 perpendicular to the longitudinal walls, because the magnetic head 103 is situated in the lower part of the apparatus. In order to ensure that the cassette can only be inserted into the apparatus in the correct positions blocking means 105 are arranged in the insertion path 107 of the apparatus 101. The blocking means comprise projections 109 adapted to cooperate with the grooves 25 and 27 in the cassette and arranged near the end of the insertion path.

Figures 4 and 5 show another apparatus 111 belonging to the system. In this case the magnetic head 113 is arranged in the upper part instead of in the lower part of the apparatus. The cassette should be inserted into the apparatus 111 with the second longitudinal wall 11 facing forwards. For this purpose the first and the second transverse walls 35, 36 are formed with a third profile 39 and a fourth profile 40 respectively formed by grooves 41, 42 and extending over a further length 35, 37. The projections 119 of the blocking means 115 are now arranged at another location in the insertion path 117.

In the above embodiment of the system the cassette 1 can be inserted into the apparatus 110, 111 in two correct positions, i.e. a first correct position and a further correct position which is turned through 180 degrees about an axis 65 relative to the first correct position. Misinsertion will not be noticed until the cassette 1 abuts against the blocking means 105, 115 at the end of the insertion path. When the profiles extend over the entire length of the transverse walls 13, 15 the blocking means can be arranged at the beginning of the insertion path, so that misinsertion of a cassette will be noticed immediately. Figure 6 shows a cassette 121 whose transverse walls 123, 125 are formed with profiles 127, 129 over the entire length.

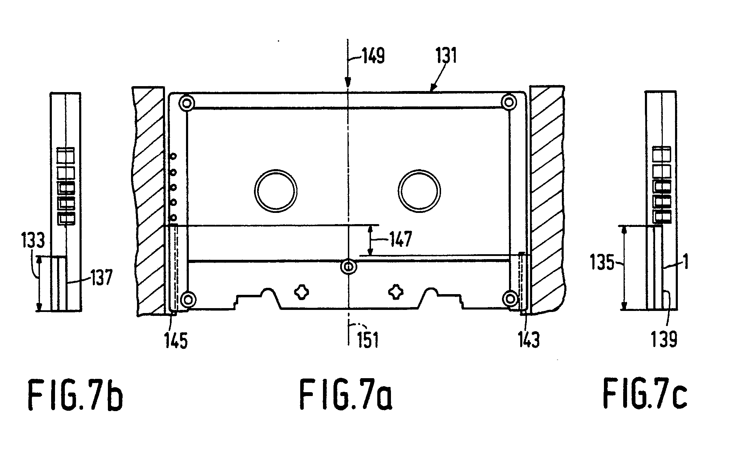

In the case of apparatuses in which the cassette is to be inserted in only one correct position misinsertion can be precluded in that in another embodiment the first and the second length, over which the first profile and the second profile respectively extend, differ from each other and in that viewed in the direction of insertion the blocking means are offset from each other in the insertion path. Figure 7a shows a situation in which a cassette 131 has been inserted into an apparatus 141 in the correct position. The blocking means 143 and 145 are situated at a distance 147 from each other viewed in the direction of insertion 149. Figures 7b and 7c are side views of the cassette 131, which clearly show that the first length 133 of the first profile 137 differs from the second length 135 of the second profile 139. If the cassette 131 is now misinserted, for example in a position which is turned through 180 degrees about an axis 151 relative to the position shown, the blocking means 145 will abut against the end of the groove of the profile 137 and thereby inhibit further insertion of the cassette 131.

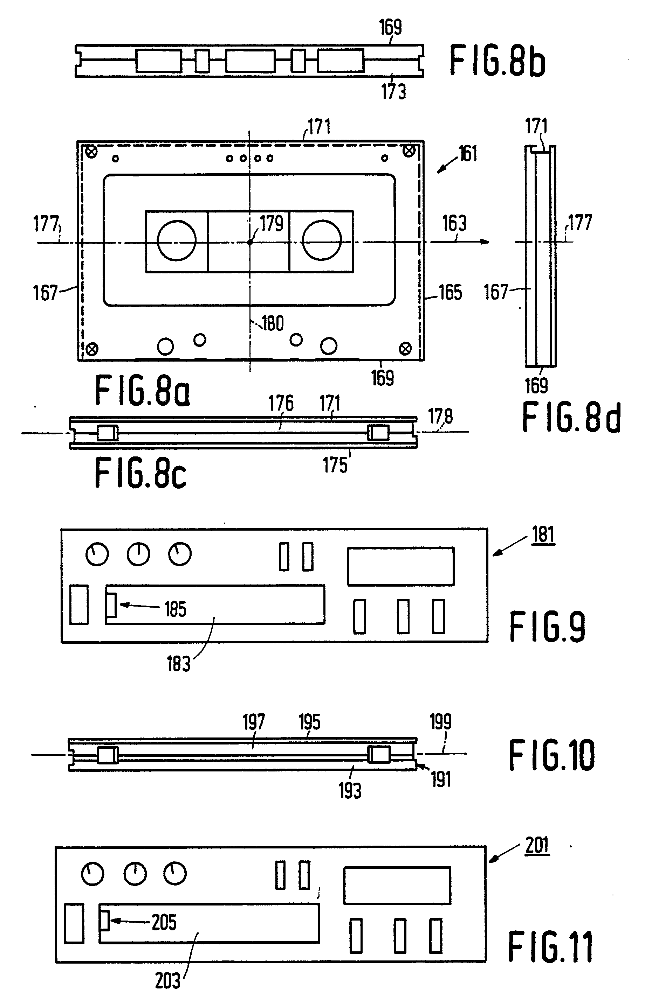

The system may also include apparatuses in which cassettes should be inserted with a transverse wall facing forwards. Figures 9 and 11 show such apparatuses in the form of car cassette-players 181 and 201. A cassette 161, as is shown in Figures 8a to 8d, is inserted in a direction 163 perpendicular to the transverse walls 165, 167. In order to preclude misinsertion of a cassette the first and the second longitudinal wall 169, 171 are formed with a fifth profile 173 and a sixth profile 175 respectively. The profiles are shaped in such a way that if a mirror image of the fifth profile 173 is formed in a third plane 177 parallel to the longitudinal walls and containing the centre 179 of the cassette the mirror image of the fifth profile 175 is not similar to the sixth profile 175. This enables blocking means 185 and 205 to be arranged in the insertion paths 183 and 203 of the apparatuses in order to cooperate with the longitudinal walls of the cassette in such a manner that the cassette can be inserted into the apparatus in the correct position only. Figure 8c shows the cassette 161 in which the sixth profile 175 is constituted by a groove 176 in the second longitudinal wall 1. The groove 176 is symmetrical relative to the second plane 178, so that the cadette can be inserted into the apparatus shown in Figure 9 in a correct position and in a further correct position which is turned through 180 degrees relative to the axis 180.

Figure 10 is a view at the second longitudinal wall 195 of an embodiment of a cassette 191 in which the sixth profile 193 is asymmetrical relative to the second plane 199. By an appropriate choice of the location of the blocking means 205 in the insertion path 203 of the apparatus 201 it can be achieved that the cassette 191 can be inserted into the apparatus 201 in only one correct position. Such an apparatus 201 is shown in Figure 11. In the two last-mentioned embodiments 161 and 191 the fifth profile 173, see Figures 8b and 8d, is constituted by the flat first longitudinal wall 169.

It is to be noted that the system in accordance with the invention is not limited to the embodiments disclosed herein. Profiles other than those shown herein, for example profiles constituted by ridges instead of by grooves, also fall within the scope of the invention. Likewise, apparatuses having differently shaped blocking means also fall within the scope of the invention.

## Claims

1. A system comprising a cassette and an apparatus suitable for cooperation with the cassette, which cassette comprises a substantially rectangular housing comprising two parallel main walls, a first and a second longitudinal wall which extend parallel with each other, and a first and a second transverse wall which extend parallel to one another, the first transverse wall being formed with a first profile over a first length, which first profile is similar over its entire length, and the second transverse wall being formed with a second profile over a second length, which second profile is similar over its entire length, said profiles both extending into at least the first longitudinal wall, which cassette can be inserted into the apparatus in a correct position in a direction perpendicular to the longitudinal walls, characterized in that if a mirror image of the first profile is formed in a first plane parallel to the transverse walls and containing the centre of the cadette and subsequently in a second plane parallel to the main walls and containing the centre of the cassette the mirror image of the first profile at least substantially coincides with the second profile, in that if a mirror image of the first profile is formed in the second plane the mirror image of the first profile is not similar to the second profile, and in that in an insertion path of the apparatus blocking means are arranged to cooperate with at least one of the transverse walls of a cassette in such a manner that the cassette can be inserted into the apparatus in the correct position.

2. A system as claimed in Claim 1, characterized in that the profiles extend over the full length of the transverse walls and into the two longitudinal walls.

3. A system as claimed in Claim 1, characterized in that the first length of the first profile differs from the second length of the second profile, and in that the blocking means which cooperate with the first transverse wall during operation and the blocking means which cooperate with the second transverse wall during cooperation are spaced from one another viewed in a direction of insertion.

4. A system as claimed in Claim 1 or 3, characterized in that the first transverse wall is formed with a third profile over a further length, which third profile is similar over said further length, in that the second transverse wall is formed with a fourth profile over a further length, which fourth profile is similar over said further length, which third and fourth profiles extend from the second longitudinal wall, in that when the mirror image of the third profile is formed in the first plane and subsequently in the second plane the mirror image of the third profile at least substantially coincides with the fourth profile, and in that when the mirror image of the third profile is formed in the second plane the mirror image of the third profile is not similar to the fourth profile.

5. A system as claimed in Claim 1, 2 or 4, characterized in that in a further position which relative the correct position is turned through 180 degrees about an axis perpendicular to and through the centre of the longitudinal walls the cassette can be inserted into the apparatus in the said direction and in that the cassette can be inserted into the apparatus exclusively in the two correct positions.

6. A system as claimed in any one of the preceding Claims, characterized in that the system comprises a further apparatus enabling the cassette to be inserted in the correct position into the further apparatus in a further direction perpendicular to the transverse walls, in that the first longitudinal wall is formed with a fifth profile over a length, which fifth profile is similar over said length, in that the second longitudinal wall is formed with a sixth profile over a length, which sixth profile is similar over said length, which profiles both extend into at least one of the transverse walls, in that when the mirror image of the fifth profile is formed in a third plane parallel to the longitudinal walls and containing the centre of the cassette the mirror image of the fifth profile is not similar to the sixth profile, and in that in a path of insertion of the further apparatus blocking means are arranged to cooperate with at least one of the longitudinal walls of a cassette to be inserted, in such a manner that the cassette can be inserted into the further apparatus in the correct position.

7. A system as claimed in Claim 6, characterized in that the fifth and the sixth profile extend over the full length of the longitudinal walls and into both transverse walls.

8. A system as claimed in Claim 6, characterized in that the sixth profile is asymmetrical relative to the second plane.

9. A system as claimed in Claim 6, 7 or 8, characterized in that in a further correct position which relative to the correct position is turned through 180 degrees about an axis perpendicular to and through the centre of the longitudinal walls the cassette can be inserted into the further apparatus in said further direction, and in that the cassette can be inserted into the further apparatus exclusively in the two correct positions.

10. A cassette suitable for use in a system as claimed in any one of the preceding Claims.

11. A cassette as claimed in Claim 10, characterized in that at least one of said profiles comprises a groove parallel to the main walls.

12. A cassette suitable for use in a system as claimed in Claim 6 or 7, characterized in that the fifth and the sixth profile are symmetrical relative to the second plane.

13. A cassette suitable for use in a system as claimed in Claim 6, 7, 8 or 9, characterized in that the fifth profile is flat.

14. An apparatus suitable for use in a system as claimed in Claim 1, 2, 3, 4, 5, 6, 7, 8 or 9.

FIG.1d

FIG.1b

FIG.1a

FIG.1c

FIG.1e

FIG.2

FIG.4

FIG.3

FIG.5

FIG.6

FIG.7b          FIG.7a          FIG.7c

FIG.8b

FIG.8a

FIG.8c

FIG.8d

FIG.9

FIG.10

FIG.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | GB-A-1480461 (SONY CORP.)<br>* claims 1-17; figures * | 1, 2, 10, 11, 14 | G11B23/087<br>G11B15/17 |
| A | GB-A-1416588 (SONY CORP.)<br>* page 3, line 86 - page 4, line 6; claims 1, 5-8; figures * | 1, 2, 6, 7, 10, 11, 13, 14 | |
| A | GB-A-2131000 (SONY CORP.)<br>* page 2, lines 6 - 32; figures 2A, 2B, 3 * | 1, 2, 10, 14 | |
| A | US-A-4803575 (A.NISHIMURA ET AL)<br>* abstract; figures * | 1, 2, 10, 11, 14 | |
| A | PATENT ABSTRACTS OF JAPAN<br>vol. 10, no. 22 (P-424)(2079) 28 January 1986,<br>& JP-A-60 175268 (MATSUSHITA DENKI SANGYO) 09 September 1985,<br>* the whole document * | 1, 2, 6, 7, 10, 14 | |
| A | PATENT ABSTRACTS OF JAPAN<br>vol. 10, no. 22 (P-424)(2079) 28 January 1986,<br>& JP-A-60 175269 (MITSUBISHI DENKI) 09 September 1985,<br>* the whole document * | 1, 3, 4, 10, 11, 14 | TECHNICAL FIELDS SEARCHED (Int. Cl.5 )<br><br>G11B |
| A | GB-A-1450744 (SONY CORP.) | | |
| A | EP-A-293047 (POLYGRAM) | | |
| A | EP-A-295921 (SONY CORP.) | | |
| A | EP-A-184139 (DATA ELECTRONICS INC.) | | |

The present search report has been drawn up for all claims

| Place of search | Date of completion of the search | Examiner |
|---|---|---|
| THE HAGUE | 20 JULY 1990 | DECLAT M.G. |

EPO FORM 1503 03.82 (P0401)